# EUROPÄISCHE PATENTSCHRIFT

(11) **EP 3 042 090 B1**
(45) Veröffentlichungstag und Bekanntmachung des Hinweises auf die Patenterteilung: **06.07.2022**
(21) Anmeldenummer: 14758867.7
(22) Anmeldetag: 02.09.2014
(51) Int. Cl.: F16B 37/04

(54) **VERBINDUNGSEINSATZ SOWIE EIN EINBETTVERFAHREN UND EIN HERSTELLUNGSVERFAHREN DAFÜR**
CONNECTING INSERT AND AN EMBEDDING METHOD AND A PRODUCTION METHOD THEREFOR
INSERT D'ASSEMBLAGE AINSI QUE PROCÉDÉ D'INCLUSION ET PROCÉDÉ DE FABRICATION CORRESPONDANT

(30) Priorität: 02.09.2013 DE 102013217448
(43) Veröffentlichungstag der Anmeldung: 13.07.2016
(73) Patentinhaber: Böllhoff Verbindungstechnik GmbH, 33649 Bielefeld (DE)
(72) Erfinder: STUMPF, Michael, 33611 Bielefeld (DE); CHALVET, Franck, 73190 St. Badolph (DE); RAHAL, Mohamed-Tahar, 73000 Chambery (FR); PERROUD, Norbert, 73190 Curienne (FR)
(74) Vertreter: HWP Intellectual Property
(86) Internationale Anmeldenummer: PCT/EP2014/068572
(87) Internationale Veröffentlichungsnummer: WO 2015/028680

(56) Entgegenhaltungen:
- EP-A1- 0 353 839
- WO-A1-2011/130070
- DE-A1- 2 530 882
- DE-A1- 3 016 590
- US-A- 3 125 146
- US-A1- 2002 014 714

## Beschreibung

### 1. Gebiet der Erfindung

Die vorliegende Erfindung betrifft einen Verbindungseinsatz, insbesondere einen Gewindeeinsatz, der in ein Kunststoffbauteil einformbar oder einbettbar ist. Des Weiteren betrifft vorliegende Erfindung ein Einbettverfahren für diesen Verbindungseinsatz in das ausgeformte Kunststoffbauteil und ein Einformverfahren für diesen Verbindungseinsatz in ein auszuformendes Bauteil. Des Weiteren ist vorliegende Erfindung auf ein Herstellungsverfahren für diesen Verbindungseinsatz gerichtet und ein Bauteil mit Verbindungseinsatz gerichtet.

### 2. Hintergrund der Erfindung

Im Stand der Technik sind unterschiedliche Verbindungseinsätze, im Speziellen Gewindeeinsätze, bekannt. In Abhängigkeit davon, in welchem Bauteilmaterial ein derartiger Verbindungseinsatz befestigt werden soll, variiert die Gestaltung der Form eines derartigen Verbindungseinsatzes. So offenbart beispielsweise US 6,676,352 B2 einen Gewindeeinsatz, der in eine vorgebohrte Öffnung eines Holzbauteils eingedreht oder eingeschlagen werden kann. Zu diesem Zweck weist dieser Verbindungseinsatz an seiner radialen Außenseite gewindeähnlich verlaufende Rippen auf, die sich in das Holz des Bauteils einschneiden. Dieser Verbindungseinsatz ist somit ähnlich einer Holzschraube aufgebaut und daher für Kunststoffbauteile nicht geeignet.

Es ist allgemein bekannt, Verbindungseinsätze in bereits ausgeformte Kunststoffbauteile einzubetten. Ein derartiges Einbetten erfolgt durch Zufuhr von Wärme zum Kunststoffbauteil, sodass lokal der Kunststoff plastifiziert wird. In diesen plastifizierten Kunststoff wird dann der Verbindungseinsatz eingepresst, sodass er nach Aushärten des Kunststoffs in dem Kunststoffbauteil befestigt ist. Für derartige einbettbare Verbindungseinsätze sind verschiedene Konstruktionen im Stand der Technik bekannt. WO 2011/130070 A1 beschreibt beispielsweise einen einbettbaren Verbindungseinsatz, der einen zylindrischen Grundkörper mit einer radialen Außenseite aufweist. An dieser radialen Außenseite sind umlaufend wellenförmig verlaufende radial vorstehende Stege angeordnet. Während des Einbettens des Verbindungseinsatzes, das heißt während der Verbindungseinsatz in axialer Richtung in den plastifizierten Kunststoff gedrückt wird, schieben diese radial vorstehenden Stege plastifizierten Kunststoff vor sich her. Da der plastifizierte Kunststoff während des Einsetzens des Verbindungseinsatzes abkühlt und zudem ein schlechtes Fließverhalten aufweist, wird nur ein Teil der Zwischenräume zwischen den wellenförmig verlaufenden Stegen mit plastifiziertem Kunststoff ausgefüllt. Dies führt dazu, dass der Verbindungseinsatz nur eine geringe axiale Auszugsfestigkeit aufweist.

Ein weiterer Verbindungseinsatz ist in WO 2011/109236 A1 beschrieben. Hier verlaufen die an der radialen Außenseite des zylindrischen Grundkörpers angeordneten radial vorstehenden Stege ebenfalls in Wellenform. Zudem sind diese Stege in axialer Richtung mit einer Neigung angeordnet. Daraus folgt, dass bezogen auf eine axiale Auszugsrichtung auch diese in annähernd axialer Richtung verlaufenden Stege nur eine begrenzte Auszugsfestigkeit bereitstellen können.

WO 2011/130073 A1 beschreibt einen einbettbaren Verbindungseinsatz, der an seiner radialen Außenseite eine Mehrzahl von vorstehenden Verriegelungsnasen aufweist. Diese Verriegelungsnasen sind in axialer Einsetzrichtung des Verbindungseinsatzes spitz zulaufend ausgeformt, um das Einbetten zu erleichtern. Entgegen der Auszugsrichtung weisen diese Verriegelungsnasen Abstützflächen auf, die annähernd senkrecht zur Auszugsrichtung orientiert sind. Diese Abstützflächen sind jedoch verglichen zur verbleibenden Fläche der radialen Außenseite klein ausgebildet, sodass bereits kein vollständiges Hinterfließen durch den plastifizierten Kunststoff aufgrund dessen hoher Oberflächenspannung stattfinden kann. Damit ist gleichzeitig verbunden, dass der aushärtende Kunststoff den Verbindungseinsatz nicht ausreichend im Kunststoffbauteil verriegelt.

Ein weiterer Verbindungseinsatz, im Speziellen ein Gewindeeinsatz, ist in DE 100 13 091 A1 beschrieben. Während an einem Ende ein radial umlaufender Kragen angeordnet ist, befinden sich an der radialen Außenseite des zylindrischen Grundkörpers mehrere aufeinander folgende konische Abschnitte. Diese konischen Abschnitte verjüngen sich in axialer Einsetzrichtung des Gewindeeinsatzes. Auf diese Weise entsteht eine Mehrzahl von radial umlaufenden Flächen, die einen Hinterschnitt und somit eine Auszugssicherung des Gewindeeinsatzes bilden könnten. Da jedoch auch hier während des Einbettens nur ein träges Fließen des plastifizierten Kunststoffs stattfindet, hinterfließt der plastifizierte Kunststoff die hier ausgebildeten radial umlaufenden Kanten nur unvollständig. Dies liegt unter anderem daran, dass die in axialer Richtung verlaufenden Fließkanäle für den plastifizierten Kunststoff nur geringe Bereiche der radialen Außenseite des Grundkörpers abdecken. Ein weiterer Nachteil besteht darin, dass zwar eine axiale Auszugssicherung bereitgestellt wird, die axiale Festigkeit in Einsetzrichtung jedoch nur begrenzt gegeben ist. Dies liegt unter anderem daran, dass die konisch geformte radiale Außenseite des Grundkörpers ein axiales Eindringen des Gewindeeinsatzes in das Kunststoffbauteil unterstützt.

Ein metallischer Gewindeeinsatz zum Einbau in Werkstücke aus thermoplastischem Kunststoff unter thermischer Erweichung des Kunststoffmaterials ist in DE 30 16 590 A1 beschrieben. Der Gewindeeinsatz umfasst mindestens einen Erhebungen und Vertiefungen aufweisenden Verankerungsabschnitt. Oberhalb des Verankerungsabschnittes ist ein zylindrischer Dichtungsabschnitt mit einer außenliegenden Ringnut vorgesehen, in die ein aus einem gegenüber der beim Einbau entwickelten Wärme relativ geringen Wärmeleitwerts

beständigen Material gefertigter Dichtungsring eingebracht ist.

Die US 3,125,146 A zeigt einen Gewindeeinsatz mit einem Erhebungen und Vertiefungen aufweisenden Bund.

Die vorliegende Erfindung stellt sich daher die Aufgabe, einen einbettbaren Verbindungseinsatz bereitzustellen, der im Vergleich zum Stand der Technik mit einer verlässlicheren Auszugssicherheit installierbar und insbesondere gegen Verdrehen gesichert ist.

### 3. Zusammenfassung der Erfindung

Die oben genannte Aufgabe wird durch einen Verbindungseinsatz, insbesondere einen Gewindeeinsatz, gemäß dem unabhängigen Patentanspruch 1 gelöst. Des Weiteren definiert der unabhängige Patentanspruch 9 ein Einbettverfahren für diesen Verbindungseinsatz in einem ausgeformten Kunststoffbauteil. Zudem ist im unabhängigen Patentanspruch 13 ein Einformverfahren zum Einformen des Verbindungseinsatzes in ein herzustellendes Bauteil während eines Urformverfahrens definiert. Darüber hinaus offenbart vorliegende Erfindung ein Herstellungsverfahren für einen derartigen Verbindungseinsatz gemäß dem unabhängigen Patentanspruch 17.

Außerdem offenbart vorliegende Erfindung ein Bauteil mit dem oben genannten Verbindungseinsatz gemäß Anspruch 20.

Vorteilhafte Ausgestaltungen und Weiterentwicklungen vorliegender Erfindung gehen aus der folgenden Beschreibung, den begleitenden Zeichnungen sowie den anhängenden Patentansprüchen hervor.

Der erfindungsgemäße Verbindungseinsatz, insbesondere ein Gewindeeinsatz oder ein Verbindungseinsatz mit Gewindebolzen, der in ein Kunststoffbauteil einformbar ist, weist die folgenden Merkmale auf: einen zylindrischen Grundkörper mit einer radialen Außenseite sowie einem ersten und einem zweiten axialen Ende, mindestens einen an der radialen Außenseite des Grundkörpers angeordneten umlaufenden Bund, der im Vergleich zum übrigen Grundkörper zumindest abschnittsweise den größten Außendurchmesser aufweist und der beabstandet zum ersten und zweiten axialen Ende des Grundkörpers angeordnet ist, und eine an der radialen Außenseite des Grundkörpers angeordnete radial vorstehende Struktur.

Der erfindungsgemäße Verbindungseinsatz ist in ein auszuformendes oder ein ausgeformtes Kunststoffbauteil einformbar, sodass ein beliebiges Verbindungselement oder ein anderes Bauteil in oder an diesem Verbindungseinsatz befestigt werden kann. Gemäß einer bevorzugten Ausgestaltung vorliegender Erfindung wird unter Einformen ein Einbetten in ein bereits ausgeformtes Kunststoffbauteil verstanden. Dazu wird zunächst das Bauteilmaterial in einem ausgewählten Bereich plastifiziert, um dort den Verbindungseinsatz einzubetten bzw. einzupressen. Dies ist unten näher erläutert. Gemäß einer weiteren bevorzugten Ausführungsform umfasst Einformen das Anordnen und Befestigen des Verbindungseinsatzes in einem Bauteil während eines Urformprozesses zur Herstellung des Bauteils. Zu derartigen Urformverfahren zählen beispielsweise Gießen, Druckgießen, Sprühkompaktieren, Spritzgießen, Extrusionsblasen, Extrusion, Sintern, Galvanoformen und Rapid Prototyping. Daher umfasst der Verbindungseinsatz vorzugsweise Gewindeeinsätze, Einsätze zum Bereitstellen eines Bayonettverschlusses, Einsätze, die eine Schnappverbindung realisieren, Einsätze mit einem bolzenartigen axialen Fortsatz, beispielsweise mit Gewinde, sowie alle anderen Verbindungssysteme, mit denen zwei Bauteile aneinander gekoppelt werden können. Im Weiteren wird der erfindungsgemäße Aufbau, das Herstellungsverfahren sowie das Verfahren zum Einbetten und das Verfahren zum Einformen des Verbindungseinsatzes in einem Bauteil anhand eines Gewindeeinsatzes erläutert. Daher gelten alle konstruktiven und funktionellen Eigenschaften des im Folgenden beschriebenen Gewindeeinsatzes allgemein für die unterschiedlichen Verbindungseinsätze.

Der erfindungsgemäße Gewindeeinsatz erzielt aufgrund der speziellen Gestaltung seiner radialen Außenseite verlässliche axiale Auszugsfestigkeiten, während gleichzeitig das Einbetten in einem ausgeformten Kunststoffbauteil sowie das Einformen in einem auszuformenden Kunststoff- oder Metallbauteil und damit das Verankern des Gewindeeinsatzes in diesem Bauteil im Vergleich zum Stand der Technik verbessert sind. Der erfindungsgemäße Gewindeeinsatz weist an seiner radialen Außenseite einen umlaufenden Bund auf, der gerade nicht an den beiden Enden des Grundkörpers angeordnet ist. Auf diese Weise erzeugt dieser mindestens eine radial vorstehende Bund, der zudem auch den größten Außendurchmesser des gesamten Gewindeeinsatzes aufweist, eine hohe axiale Festigkeit in beide axiale Belastungsrichtungen des Gewindeeinsatzes auf. Dies wird vorzugsweise nur dadurch realisiert, dass der radial umlaufende Bund einen verriegelnden Hinterschnitt sowohl in die axiale Auszugsrichtung des Gewindeeinsatzes wie auch in seine Einbettrichtung bildet. In Kombination mit dieser axialen Stabilität des Gewindeeinsatzes wird durch die an der radialen Außenseite zusätzlich angeordnete radial vorstehende Struktur eine Verdrehsicherung des Gewindeeinsatzes um seine Längsachse realisiert. Zusammenfassend ist hervorzuheben, dass der befestigende Formschluss zwischen dem Verbindungseinsatz und dem Bauteil bzw. dem Bauteilmaterialgerade durch die erhabenen Hinterschnitte der äußeren Gestaltung des Verbindungseinsatzes, im Speziellen des zylindrischen Grundkörpers, erzeugt wird. Diese erhabenen Hinterschnitte sind wirksamer als die aus dem Stand der Technik bekannten Einstiche und Vertiefungen an der radialen Außenseite von Verbindungseinsätzen.

Um diese Verdrehsicherung zu garantieren, ist die erfindungsgemäße Gestaltung derart, dass die radial vorstehende Struktur kontinuierlich und/oder diskontinuierlich in Längsrichtung des Grundkörpers, vorzugsweise parallel zur Längsachse des Grundkörpers, verläuft. Basierend auf dieser Ausrichtung bzw. dieses Verlaufs der vorstehenden Struktur bilden sich radiale Hinterschnitte aus, die einer Drehung des Gewindeeinsatzes blockierend entgegenwirken.

Bevorzugt ist der mindestens eine umlaufende Bund in axialer Richtung des Grundkörpers durch zwei Seitenflächen begrenzt, die zumindest abschnittsweise jeweils einen Winkel von maximal 90° mit der Längsachse des Grundkörpers, insbesondere einen Winkel kleiner 90°, einschließen. Untersuchungen haben gezeigt, dass gerade ein umlaufender Bund mit zwei gegenüberliegend angeordneten und somit in beide Richtungen als Hinterschnitt wirkenden Seitenflächen die axiale Festigkeit des Gewindeeinsatzes vorteilhaft unterstützt. Dabei ist ein weiteres Kriterium, in welchem Winkel die Seitenflächen zur Längsachse des Gewindeeinsatzes angeordnet sind. Erstaunlicherweise erzeugt gerade ein Winkel von 90° und kleiner zwischen der Seitenfläche und der Längsachse des Grundkörpers eine weitere Steigerung der axialen Festigkeit des Gewindeeinsatzes innerhalb des Kunststoffbauteils. Daher werden gemäß unterschiedlicher bevorzugter Ausführungsformen unterschiedliche spitze Winkel zwischen den Seitenflächen des Bundes und der Längsachse des Grundkörpers genutzt, die je nach Belastung des Gewindeeinsatzes im Kunststoffbauteil konfiguriert sind. Besonders bevorzugte Winkel liegen beispielsweise im Bereich zwischen 85° und 70°.

Um das unten beschriebene Einbettverfahren des Gewindeeinsatzes zu unterstützen, weist der Bund des Gewindeeinsatzes vorzugsweise in einer umfänglichen Verlaufsrichtung einen abschnittsweise sich ändernden Durchmesser auf, sodass eine Mehrzahl von radialen Tälern und Erhebungen im Bund angeordnet sind. Erstaunlicherweise behindert der umlaufende Bund trotz seiner Dimensionierung nicht das Einbetten des Gewindeeinsatzes im Kunststoffbauteil, denn gerade die radialen Täler sorgen dafür, dass ausreichend plastifizierter Kunststoff über den Bund überströmen und somit sich in der Struktur an der radialen Außenseite des Grundkörpers verteilen kann. Dieses Überströmen in den radialen Tälern bewirkt ebenfalls, dass die spitzen Winkel zwischen den Seitenflächen des Bundes und der radialen Außenseite des Gewindeeinsatzes vollständig oder nahezu vollständig mit Kunststoff ausgefüllt werden. Nach dem Erstarren des zuvor plastifizierten Kunststoffs bewirken gerade die Erhebungen im umlaufenden Bund, die bereits oben beschriebene axiale Festigkeit des Gewindeeinsatzes.

Gemäß einer weiteren bevorzugten Ausführungsform vorliegender Erfindung besteht die radial vorstehende Struktur benachbart zum umlaufenden Bund aus einer vorzugsweise bereichsweise parallel und/oder schräg zur Längsachse des Grundkörpers verlaufenden Rändelung, die einseitig oder beidseitig vom Bund angeordnet ist. Es ist in diesem Zusammenhang bevorzugt, dass sich diese Struktur über den gesamten Bereich zwischen den axialen Enden des Grundkörpers und dem umlaufenden Bund erstreckt. Gleicherweise ist es bevorzugt, dass diese Struktur nur Teilbereiche zwischen den axialen Enden des Grundkörpers und dem Bund ausfüllt. Gemäß einer weiteren bevorzugten Ausführungsform vorliegender Erfindung besteht diese Rändelung aus gleichmäßig zueinander beabstandeten radial vorstehenden Stegen, die eine eckige, abgerundete oder krummlinige Querschnittsform aufweisen. Die bisher oben beschriebene Struktur des Verbindungseinsatzes ist für unterschiedliche

Verbindungseinsätze anwendbar. Daher ist eine erfindungsgemäße Gestaltung derart, dass der Verbindungseinsatz eine zentrale Bohrung mit der radialen Innenseite aufweist, an der eine Verbindungsstruktur vorgesehen ist. Diese Verbindungsstruktur bildet ein Gewinde, einen Bajonettverschluss, eine radiale Rändelung oder eine andere Verbindungskonstruktion, die mit einem einsetzbaren Verbindungselement zusammenwirkt.

Gemäß einer weiteren bevorzugten Ausführungsform vorliegender Erfindung ist der mindestens eine umlaufende Bund axial mittig und/oder benachbart zu den axialen Enden des zylindrischen Grundkörpers angeordnet. Dabei ist der Bund aber nicht angrenzend an die axialen Enden angeordnet. Gemäß einer anderen bevorzugten Ausführungsform vorliegender Erfindung weist der mindestens eine Bund oder eine Mehrzahl von umlaufenden Bünden einzeln oder gemeinsam eine axiale Breite von 10 % bis 60 % einer Gesamtlänge des Grundkörpers auf. Gemäß einer weiteren bevorzugten Ausführungsform umfasst diese axiale Breite 20 % bis 40 % der Gesamtlänge des Grundkörpers. Mit Hilfe einer Mehrzahl von umlaufenden Bünden wird die axiale Festigkeit des Gewindeeinsatzes weiter gesteigert.

Gemäß einer weiteren erfindungsgemäßen Gestaltung des Verbindungseinsatzes umfasst der zylindrische Grundkörper an seinem ersten axialen Ende einen bolzenartigen axialen Fortsatz. Vorzugsweise ist dieser Fortsatz stufenförmig vom Grundkörper abgesetzt und/oder besitzt vorzugsweise eine Länge im Bereich von 40 % bis 200 % einer Länge des Grundkörpers. Des Weiteren ist es bevorzugt, den Fortsatz als einen Verbindungsbolzen mit einem Außengewinde oder einer Verrastungskontur oder einer Steckverbindungskontur auszubilden.

Der erfindungsgemäß bevorzugte Verbindungseinsatz mit axialem Fortsatz stellt eine konstruktive Alternative zum Gewindeeinsatz mit Innengewinde dar. Während die erforderlichen Schritte zum Einformen die gleichen sind wie beim Gewindeeinsatz mit Innengewinde, werden weitere Verbindungsmöglichkeiten bereitgestellt. Denn bereits ein Aufstecken eines Verbindungselements auf den Fortsatz oder ein Verrasten an dem Fortsatz stellt eine verlässliche Verbindung her. Zudem ist der Verbindungseinsatz mit axialem Fortsatz günstig mittels Kaltschlagen und vorzugsweise Rollen des Gewindes auf dem Fortsatz herstellbar. Als Ergebnis liegt ein hochfester Verbindungseinsatz mit Gewindebolzen vor, der kostengünstig im Vergleich zu Zerspanungsverfahren herstellbar ist.

Des Weiteren umfasst vorliegende Erfindung ein Bauteil mit einem eingebetteten oder eingeformten Verbindungseinsatz gemäß der obigen Beschreibung. Dieses Bauteil besteht vorzugsweise aus Kunststoff, der mit Hilfe der Zufuhr von Wärme plastifizierbar ist, sodass der Verbindungseinsatz in das bereits ausgeformte Bauteil einbettbar ist. Es ist zudem bevorzugt, das Bauteil aus Metall bereitzustellen, in welches ebenfalls der Verbindungseinsatz eingeformt werden kann. Gemäß einer weiteren Ausführungsform vorliegender Erfindung ist der Verbindungseinsatz auch mit Hilfe anderer Verfahren in ein Kunststoffbauteil einformbar. Zu diesem Zweck wird der Verbindungseinsatz beispielsweise noch vor dem Ausformen des Kunststoff- oder Metallbauteils in einer dafür vorgesehenen Form positioniert und nachfolgend durch den Kunststoff oder das Metall des Bauteils eingeformt.

Vorliegende Erfindung umfasst des Weiteren ein Einbettverfahren für den oben beschriebenen Verbindungseinsatz, das die folgenden Schritte aufweist: Plastifizieren von Material in einem Einbettbereich eines ausgeformten Kunststoffbauteils, Einpressen des Verbindungseinsatzes in axialer Richtung in den Einbettbereich derart, dass Material des Kunststoffbauteils an dem Bund aufgestaut wird und zumindest teilweise den Bund überströmt, sodass der Bund nach Materialaushärtung eine axiale Auszugssicherung bildet. Wie bereits oben erläutert worden ist, führen gerade die am Bund des Verbindungselements vorgesehenen radialen Täler und Erhebungen dazu, dass während des Einpressens das plastifizierte Material in den radialen Tälern den Bund überströmt und an den Erhebungen aufgestaut wird. Diese Strömungsverhältnisse des plastifizierten Kunststoffs am erfindungsgemäß bevorzugt geformten Bund sorgen für ein Ausfüllen nahezu aller oder jeglicher Freiräume an der radialen Außenseite des Grundkörpers durch plastifizierten Kunststoff, sodass der Verbindungseinsatz nach Aushärten des Kunststoffs optimal im Kunststoffbauteil befestigt ist.

Während des Einbettverfahrens ist es zudem bevorzugt, dass das plastifizierte Material in die axiale Rändelung benachbart zum Bund fließt, sodass dadurch nach Aushärtung des Kunststoffs eine Verdrehsicherung des Verbindungseinsatzes realisiert wird. Weiterhin erfindungsgemäß bevorzugt überströmt das plastifizierte Material des Kunststoffbauteils an dem Bund beidseitig jeweils eine axiale Seitenfläche, sodass das plastifizierte Material nach einem Aushärten einen spitzwinkligen Hinterschnitt als beidseitige axiale Auszugssicherung bildet.

Vorliegende Erfindung offenbart zudem ein Einformverfahren für den Verbindungseinsatz, der oben beschrieben worden ist. Das Einformverfahren realisiert das Befestigen des Verbindungseinsatzes in einem Bauteil, während das Bauteil mit Hilfe eines Urformverfahrens, wie bspw. Gießen oder Spritzgießen, aus Metall oder Kunststoff hergestellt wird. Das Einformverfahren umfasst die folgenden Schritte: Positionieren des Verbindungseinsatzes in einer Form, vorzugsweise Spritzform, Umgeben, vorzugsweise Umspritzen, des Verbindungseinsatzes mit einem plastifizierten aushärtbaren Material, wobei der Verbindungseinsatz in ein Bauteil eingeformt wird, und Aushärten des umgebenden, vorzugsweise umspritzten, Materials und Entformen des Bauteils mit Verbindungseinsatz aus der Form. In diesem Zusammenhang ist es ebenfalls bevorzugt, dass der Bund des Verbindungselements radiale Täler und Erhebungen aufweist, sodass während des Umspritzens oder Umgießens das plastifizierte Material in den radialen Tälern den Bund überströmt und an den Erhebungen aufgestaut wird. Weiterhin bevorzugt fließt das plastifizierte Material während des Einformverfahrens in eine axiale Rändelung benachbart zum Bund, sodass dadurch nach Aushärtung eine Verdrehsicherung entsteht. Gemäß einer weiteren bevorzugten Ausführungsform überströmt das plastifizierte Material an dem Bund beidseitig jeweils eine axiale Seitenfläche, sodass das plastifizierte Material nach einem Aushärten einen spitzwinkligen Hinterschnitt als beidseitige axiale Auszugssicherung bildet. Aus obiger Beschreibung folgt, dass das Einformverfahren ähnliche Merkmale und Vorteile wie das Einbettverfahren aufweist, so dass zur Erläuterung des Einformverfahrens ebenfalls die Beschreibung des Einbettverfahrens herangezogen wird. Lediglich der Ausgangspunkt des jeweiligen Befestigungsverfahrens ist unterschiedlich.

Vorliegende Erfindung umfasst des Weiteren ein Herstellungsverfahren des oben beschriebenen Verbindungseinsatzes. Dieses Herstellungsverfahren weist die folgenden Schritte auf: Bereitstellen eines zylindrischen Grundkörpers aus Metall, der ein erstes und ein zweites Ende umfasst, Positionieren des Grundkörpers mit dem ersten Ende in oder zu einer ersten Matrize und mit dem zweiten Ende in oder zu einer zweiten Matrize, Aufstauchen und/oder Fließpressen des ersten und zweiten Endes des Grundkörpers, sodass ein zumindest abschnittsweise umlaufender Bund ausgeformt wird, der im Vergleich zum übrigen Grundkörper den größten Außendurchmesser aufweist und beabstandet zum ersten und zweiten Ende des Grundkörpers angeordnet ist. Es versteht sich, dass das Herstellungsverfahren durch weitere Formgebungsschritte ergänzt werden kann, um hier den erfindungsgemäß bevorzugten Verbindungseinsatz zu erzielen.

Das erfindungsgemäß bevorzugte Herstellungsverfahren nutzt ein kostengünstiges Kaltfließpressen oder Kaltschlagen, wie oben bereits angedeutet worden ist, um die oben beschriebenen erfindungsgemäß bevorzugten konstruktiven Merkmale des Verbindungseinsatzes zu erzeugen. Dadurch sind höherfeste Stähle mit Festigkeiten im Bereich von 8.8 bis 10.9 gemäß DIN EN ISO 898-1 einsetzbar, die gerade bei einem Innengewinde oder einem Gewindebolzen bzw. -fortsatz des Verbindungseinsatzes verlässliche Verbindungseigenschaften erzielen. Beim Einsatz von Aluminium als Material des Verbindungseinsatzes stellt das Verfahren der Kaltverfestigung belastbarere Gewinde im Vergleich zu Gewinden aus spanender Herstellung bereit. In gleicher Weise ist es ebenfalls möglich, das Warmpressen anzuwenden oder den Verbindungseinsatz mittels Gießen herzustellen. Aus wirtschaftlichen Gründen wird aber das Kaltfließpressen favorisiert, da sich auf diese Weise gerade der speziell geformte umlaufende Bund des Verbindungseinsatzes ausformen lässt. Zu diesem Zweck wird bevorzugt ein Drahtstück von einem Endlosdraht abgeschert und als Grundkörper in der ersten und zweiten Matrize positioniert. Die erste und zweite Matrize geben in komplementärer Ausgestaltung die spätere Form des Verbindungseinsatzes vor. So ist es gemäß einer bevorzugten Ausführungsform des Herstellungsverfahrens vorgesehen, dass nach dem Aufstauchen und/oder Fließpressen des Drahtstücks in der ersten und der zweiten Matrize ein zylindrischer Grundkörper mit einem umlaufenden Bund vorliegt. Es ist ebenfalls bevorzugt, dass bereits während des Aufstauchens und/oder Fließpressens der Bund mit den oben beschriebenen radialen Tälern und Erhebungen ausgeformt wird. Gemäß einer weiteren bevorzugten Ausführungsform wird neben der gerade beschriebenen Formgestaltung des Bundes auch die radiale Außenseite zwischen Bund und den Enden des Grundkörpers mit der oben beschriebenen Struktur versehen. Gemäß einer anderen bevorzugten Herstellungsroute ist es ebenfalls bevorzugt, die radiale Struktur sowie die Formgestaltung des Bundes durch Rollen herzustellen.

Zur Herstellung eines Verbindungseinsatzes mit axialem Fortsatz, wie er oben beschrieben worden ist, erfolgt ein Ausformen eines sich an das erste axiale Ende des Grundkörpers anschließenden bolzenartigen axialen Fortsatzes. Entsprechend der angestrebten Verbindungskonstruktion umfasst der Fortsatz ein Gewinde, eine Verrastungskontur oder eine Kontur zur Herstellung einer Steckverbindung.

### 4. Kurze Beschreibung der begleitenden Zeichnungen

Die bevorzugten Ausführungsformen vorliegender Erfindung werden unter Bezugnahme auf die begleitende Zeichnung näher erläutert. Es zeigen:
- Figur 1: eine erste bevorzugte Ausführungsform des Verbindungseinsatzes vorliegender Erfindung,
- Figur 2: eine axiale Schnittdarstellung des Verbindungseinsatzes gemäß Figur 1,
- Figur 3: eine zweite bevorzugte Ausführungsform des erfindungsgemäßen Verbindungseinsatzes,
- Figur 4: einen axialen Schnitt durch die Ausführungsform gemäß Figur 3,
- Figur 5: eine dritte bevorzugte Ausführungsform des erfindungsgemäßen Verbindungseinsatzes,
- Figur 6: eine axiale Schnittdarstellung der Ausführungsform gemäß Figur 5,
- Figur 7: eine dritte bevorzugte Ausführungsform des erfindungsgemäßen Verbindungseinsatzes mit einem axialen Fortsatz,
- Figur 8: einen axialen Schnitt durch die Ausführungsform gemäß Figur 7,
- Figur 9: ein Flussdiagramm einer bevorzugten Ausführungsform des Einbettverfahrens für den erfindungsgemäß bevorzugten Verbindungseinsatz,
- Figur 10: ein Flussdiagramm einer bevorzugten Ausführungsform des Einformverfahrens für den erfindungsgemäß bevorzugten Verbindungseinsatz und
- Figur 11: ein Flussdiagramm einer bevorzugten Ausführungsform eines Herstellungsverfahrens einer bevorzugten Ausführungsform des Verbindungseinsatzes.

### 5. Detaillierte Beschreibung der bevorzugten Ausführungsformen

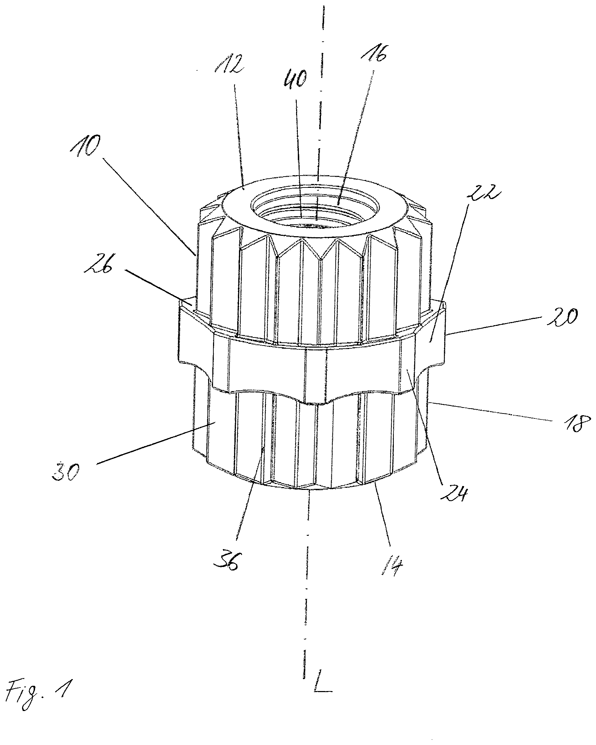

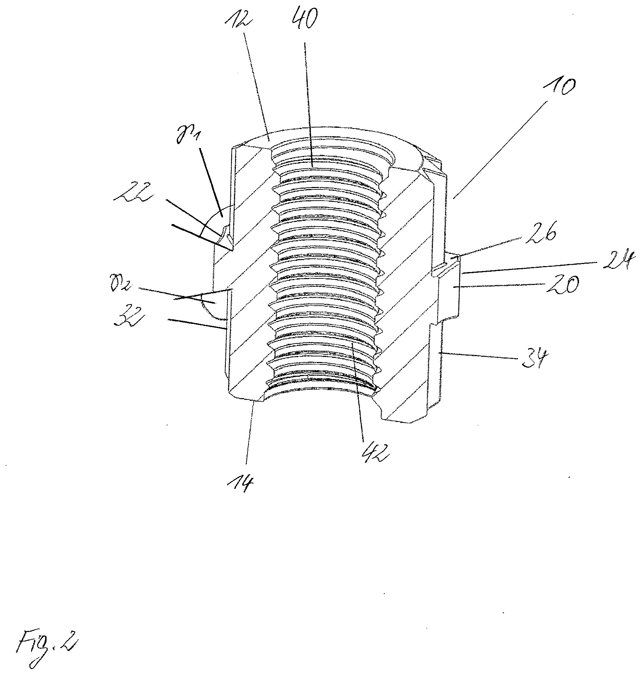

Im Folgenden wird der erfindungsgemäße Verbindungseinsatz anhand der bevorzugten Ausführungsform eines Gewindeeinsatzes erläutert. Figur 1 zeigt eine erste bevorzugte Ausführungsform des Gewindeeinsatzes, während in Figur 2 eine axiale Schnittdarstellung dieses Gewindeeinsatzes dargestellt ist. Dieser Gewindeeinsatz umfasst einen zylindrischen Grundkörper 10, der sich entlang seiner Längsachse L erstreckt. Dieser Grundkörper 10 weist ein erstes axiales Ende 12 und ein zweites axiales Ende 14 auf. Da es sich in der bevorzugten Ausführungsform der vorliegenden Erfindung um einen Gewindeeinsatz handelt, ist eine zentrale Bohrung 40 im Grundkörper 10 vorgesehen. An einer radialen Innenseite 16 des Grundkörpers 10 ist daher ein Gewinde angeordnet. Ebenfalls bevorzugt kann man den Verbindungseinsatz mit einem Bayonettverschluss, einem Verrastungsmechanismus bzw. einer Verrastungsstruktur oder mit einer anderen Verbindungskonstruktion ausstatten. Gemäß einer weiteren bevorzugten Ausführungsform weist der Grundkörper anstelle einer Bohrung mit Innengewinde einen axialen Fortsatz 50 auf, der am ersten 12 oder zweiten Ende 14 angeordnet ist (siehe unten). Da der Fortsatz 50 mit einer Verbindungskontur 52, vorzugsweise ein Gewinde 52, versehen ist, wird eine Verbindung anstelle über das Innengewinde über den nun vorliegenden Gewindebolzen hergestellt. Der bevorzugte Gewindeeinsatz und seine Eigenschaften stehen exemplarisch für den Aufbau, die Funktion, die Verwendung sowie die Herstellung von erfindungsgemäßen Verbindungseinsätzen.

Der zylindrische Grundkörper 10 wird in axialer Richtung durch das erste 12 und das zweite Ende 14 begrenzt. Über seine Länge ist er vorzugsweise im Durchmesser gleichmäßig, abgestuft oder sich verjüngend oder verbreiternd ausgeformt. Dies gilt sowohl für einen Gewindeeinsatz mit Innengewinde 42 wie auch für einen Verbindungseinsatz mit axialem Fortsatz 50.

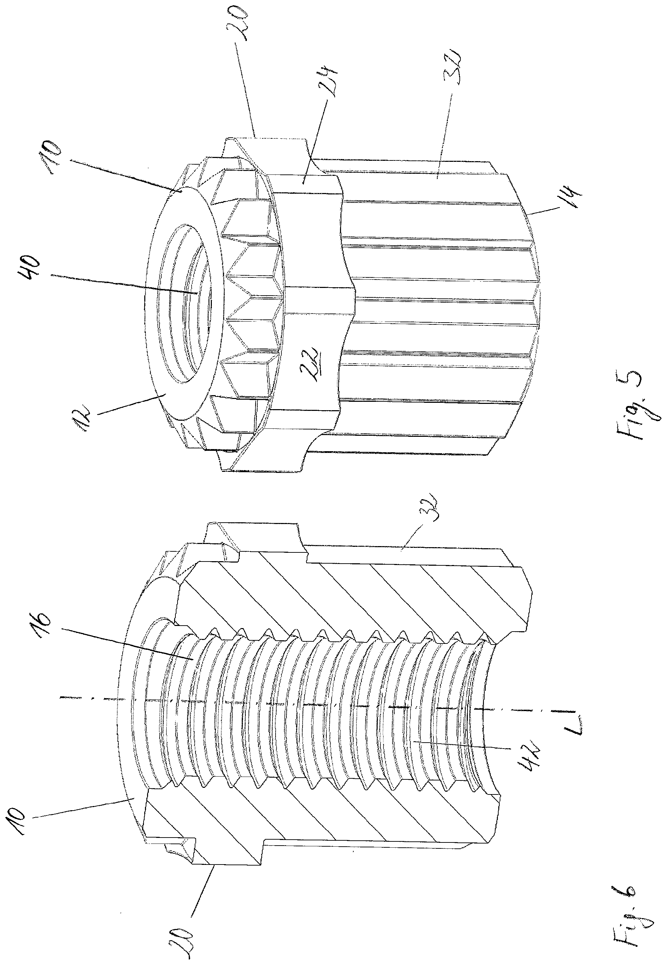

An einer radialen Außenseite 18 des Grundkörpers 10 ist mindestens ein radial umlaufender Bund 20 angeordnet. Dieser Bund 20 weist im Vergleich zum übrigen Grundkörper 10 den größten Außendurchmesser auf. Zudem ist der Bund 20 nicht am ersten axialen Ende 12 oder am zweiten axialen Ende 14 des Grundkörpers 10 angeordnet. Vielmehr befindet sich der Bund 20 in einer mittigen Anordnung bezogen auf die Länge des Grundkörpers 10. Gemäß einer in den Figuren 5 und 6 gezeigten bevorzugten Ausführungsform vorliegender Erfindung ist der Bund 20 außermittig im Hinblick auf die Länge des Grundkörpers 10 angeordnet. Gleichzeitig ist der Bund 20 aber beabstandet vom ersten axialen Ende 12 und vom zweiten axialen Ende 14, sodass der Bund 20 nicht den axialen Abschluss des Grundkörpers 10 bildet.

Gemäß einer weiteren bevorzugten Ausführungsform vorliegender Erfindung (nicht gezeigt) ist eine Mehrzahl von Bünden 20 an der radialen Außenseite 18 des Grundkörpers 10 angeordnet. Während nur ein Bund 20 vorzugsweise eine axiale Breite von 10 % bis 60 % einer Gesamtlänge des Grundkörpers 10 aufweist, gilt das Gleiche für die addierten axialen Breiten mehrerer an der radialen Außenseite 18 angeordneter Bünde. Vorzugsweise erstreckt sich die Breite eines Bundes 20 oder mehrerer gedacht aneinander gereihter Bünde über 20 % bis 40 % der Gesamtlänge des Grundkörpers 10.

Des Weiteren umfasst der Grundkörper 10 an seiner radialen Außenseite 18 eine radial vorstehende Struktur 30. Diese Struktur 30 verläuft vorzugsweise in axialer Richtung des Grundkörpers 10. Gemäß einer bevorzugten Ausführungsform der Figuren 1 bis 6 erstreckt sich die Struktur 30 über den vollständigen Bereich zwischen dem Bund 20 und dem ersten axialen Ende 12 und/oder dem zweiten axialen Ende 14 des Grundkörpers 10. Es ist ebenfalls bevorzugt, dass sich die Struktur 30 nur in Teilbereichen zwischen dem Bund 20 und dem ersten 12 und/oder zweiten axialen Ende 14 erstreckt. Gemäß einer weiteren bevorzugten Ausführungsform vorliegender Erfindung verläuft die Struktur 30 kontinuierlich in den oben beschriebenen Bereichen, wie es in den Figuren 1 bis 6 zu erkennen ist. Des Weiteren ist es bevorzugt, dass die Struktur zwischen dem Bund 20 und dem ersten 12 und/oder zweiten axialen Ende 14 durchbrochen ist. Daraus folgt, dass die bevorzugten in axialer Richtung verlaufenden Stege 34 und Vertiefungen 36 kontinuierlich oder unterbrochen bzw. diskontinuierlich zwischen dem Bund 20 und dem ersten 12 und/oder dem zweiten axialen Ende 14 verlaufen.

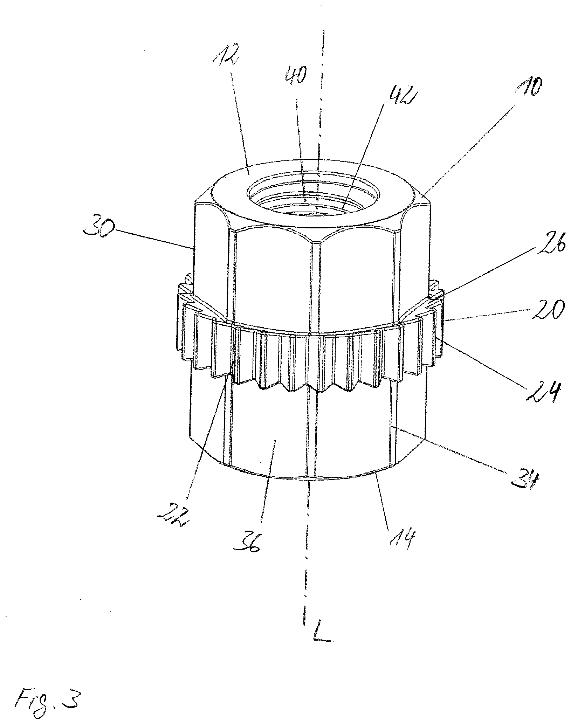

Gemäß den in den Figuren 1 bis 6 gezeigten Ausführungsformen vorliegender Erfindung ist als Struktur 30 eine umfänglich angeordnete Rändelung 32 vorgesehen. Diese Rändelung 32 besteht aus sich abwechselnden Stegen 34 und Vertiefungen 36, wobei die Stege 34 und die Vertiefungen 36 vorzugsweise eine eckige, abgerundete oder krummlinige Querschnittsform (nicht gezeigt) aufweisen. Die Figuren 1 und 2 zeigen eine bevorzugte gezackte Rändelung 32, während in Figur 3 eine torxförmige Rändelung als Struktur 30 vorgesehen ist.

Sobald der Gewindeeinsatz in ein Kunststoffbauteil eingebettet wird, strömt Kunststoff in die Vertiefungen 36 und härtet dort aus. Auf diese Weise bildet der ausgehärtete Kunststoff in den Vertiefungen 36 einen axialen Hinterschnitt, der ein Drehen des Gewindeeinsatzes um seine Längsachse L blockiert. In gleicher Weise wirkt auch der Aufbau des Bundes 20 aus Tälern 22 und Erhebungen 24, der unten näher erläutert ist.

Gemäß den Figuren 1 und 2 weist der Bund 20 eine abwechselnde Anordnung von Tälern 22 und Erhebungen 24 bezogen auf ihre radiale Erstreckung auf. Gerade die Erhebungen 24 bilden nach dem Einformen bzw. Einpressen des Gewindeeinsatzes in ein Kunststoffbauteil eine Auszugssicherung in axialer Richtung des Grundkörpers 10. Diese Auszugssicherung wirkt in beide axiale Richtungen, sodass der Gewindeeinsatz gegen Zug- und Druckbelastung in axialer Richtung gesichert ist. Der Bund 20 allgemein und gerade die Erhebungen 24 bilden somit einen axialen Hinterschnitt, dessen Wirkung durch die Ausbildung der axialen Seitenflächen 26 des Bundes 20 noch unterstützt wird.

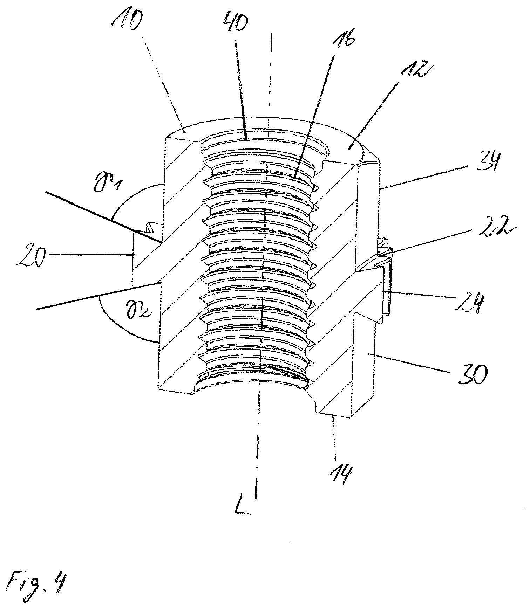

Vorzugsweise schließen die Seitenflächen 26 mit der Längsachse L des Grundkörpers 10 einen Winkel von maximal 90° ein. Gemäß einer weiter bevorzugten Ausführungsform ist dieser Winkel kleiner als 90°. Zur Erläuterung ist dieser Winkel als γ₁ und γ₂ in den Figuren 2 und 4 dargestellt. γ₁ bezeichnet den Winkel zwischen der Seitenfläche 26, die dem ersten axialen Ende 12 zugewandt ist, und der Längsachse L des Grundkörpers. γ₂ bezeichnet den Winkel zwischen der Seitenfläche 26, die dem zweiten axialen Ende 14 zugewandt ist, und der Längsachse L des Grundkörpers 10. γ₁ und γ₂ können gleich groß oder unterschiedlich groß sein. Gemäß unterschiedlicher bevorzugter Ausführungsformen haben die Winkel eine Größe von 90° < γ₁, γ₂ < 65°, weiter bevorzugt 80°≤ γ₁, γ₂ ≤ 70°. In den bevorzugten Ausführungsformen der Figuren 2 und 4 sind die Winkel γ₁ und γ₂ gleich groß und spitzwinklig ausgebildet.

Wie man anhand der unterschiedlichen Ausgestaltungen des Bundes 20 in den Figuren 1 bis 6 erkennen kann, sind die Erhebungen 24 und die Täler 22 unterschiedlich geformt. Vorzugsweise sind sie sägezahnähnlich gemäß Figur 3 oder abgeflacht und konkav gemäß Figur 1 oder allgemein im radialen Querschnitt eckig, abgerundet oder krummlinig ausgebildet. Während die Formgebung des Bundes 20 mit den Erhebungen 24 und den Tälern 22 unterschiedlich ausfallen kann, muss die Funktionalität des im Durchmesser variierend geformten Bundes gewährleistet sein. Denn beim Einbetten gemäß Schritt S1 (siehe unten) bewirken die Erhebungen 24 ein Aufstauen von plastifiziertem Kunststoff am Bund 20 entgegen der Einbettrichtung. Dieses Aufstauen sorgt für ausreichenden plastifizierten Kunststoff, der die Struktur 30 sowie den Raum zwischen der Seitenfläche 26 und der radialen Außenseite 18 des Grundkörpers 10 im Winkelbereich γ₂ ausfüllt.

Gleichzeitig gestatten bevorzugt die Täler 22 ein ausreichendes Überströmen des aufgestauten Kunststoffs über den Bund 20. Dieser überströmende Kunststoff wird genutzt, um die Struktur 30 an der anderen Seite des Bundes 20 sowie den Winkelbereich zwischen der Seitenfläche 26 und der radialen Außenseite 18 des Grundkörpers 10 im Winkelbereich γ₁ auszufüllen.

Da die Struktur 30 vorzugsweise in axialer Richtung des Grundkörpers 10 verläuft, wird dadurch ein Fließen des Kunststoffs in die Vertiefungen 26 unterstützt.

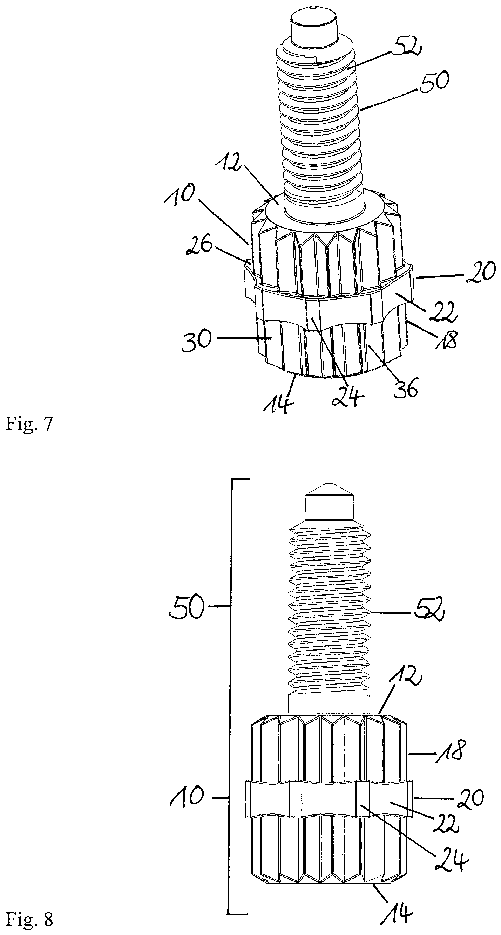

Eine weitere bevorzugte Ausführungsform des Verbindungseinsatzes ist in den Figuren 7 und 8 gezeigt. Der Verbindungseinsatz umfasst ebenfalls den zylindrischen Grundkörper 10 mit dem ersten 12 und zweiten axialen Ende 14. Dieser Grundkörper 10 weist in seiner äußeren Gestaltung die gleichen Merkmale auf, wie sie oben allgemein und/oder Bezug nehmend auf die Ausführungsformen der Figuren 1 bis 6 erläutert worden sind.

Im Unterschied zum Gewindeeinsatz umfasst der Verbindungseinsatz gemäß Figuren 7 und 8 an seinem ersten axialen Ende 12 einen bolzenartigen axialen Fortsatz 50. Vorzugsweise weist der Fortsatz 50 einen geringeren Durchmesser als der Grundkörper 10 und der Bund 20 auf. Es ist ebenfalls bevorzugt, den Durchmesser des Fortsatzes 50 gleich oder größer als den Außendurchmesser des Grundkörpers 10 und/oder des Bunds 20 vorzusehen. Somit geht der Grundkörper 10 an seinem axialen Ende 12 abgestuft über in den Fortsatz 50, wobei alternativ auch ein stetiger Übergang realisierbar ist. Zudem ist es bevorzugt, dass der Fortsatz 50 eine zylindrische, eine konische, eine über seine Länge abgestufte oder eine anderweitig geformte Gestalt aufweist (nicht gezeigt).

Gemäß den Figuren 7 und 8 ist der Verbindungseinsatz mit Fortsatz 50 integral ausgebildet. Es ist ebenfalls bevorzugt, dass der Verbindungseinsatz zweiteilig ausgebildet ist, indem der axiale Fortsatz 50 in einer innere Öffnung des Verbindungseinsatzes befestigt, vorzugsweise eingeschraubt, eingeklebt, eingeschrumpft oder anderweitig darin befestigt, ist. Gemäß einer weiteren bevorzugten Ausführungsform umfasst der Verbindungseinsatz mit Fortsatz 50 eine axiale Durchgangsbohrung, um beispielsweise über den Verbindungseinsatz einen Flüssigkeitsanschluss an einem Bauteil zu realisieren.

An seiner radialen Außenseite weist der Fortsatz 50 vorzugsweise ein Gewinde 52 auf. Gemäß anderer bevorzugter Ausführungsformen sind an dieser Stelle auch andere Verbindungskonturen oder -konstruktionen realisierbar, wie vorzugsweise eine Verrastungskontur, eine Steckverbindungskontur oder eine Verkeilkontur. In diesem Zusammenhang ist hervorzuheben, dass der Fortsatz 50 in seiner axialen Länge gemessen beginnend am ersten axialen Ende 12 des Grundkörpers 10 an bestimmte Verbindungerfordernisse anpassbar ist. Daher weist der Fortsatz 50 vorzugsweise eine Länge im Bereich von 40 % bis 200 %, vorzugsweise 60 % bis 120 %, einer Länge des Grundkörpers 10 auf.

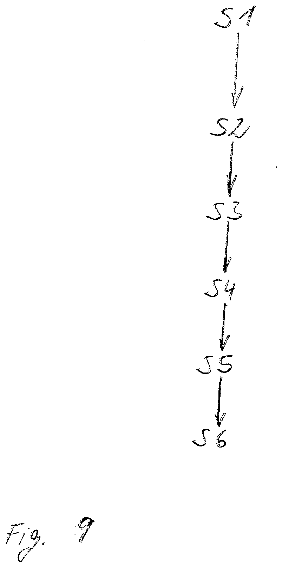

Das erfindungsgemäß bevorzugte Einbettverfahren des Gewindeeinsatzes lässt sich basierend auf dem Flussdiagramm der Figur 9 folgendermaßen beschreiben. Zunächst wird im Schritt S1 das Material eines vorgeformten Kunststoffbauteils in einem ausgewählten Einbettbereich plastifiziert. Das Plastifizieren erfolgt mittels Zufuhr von Wärme, induktiv oder mit Hilfe von Ultraschall basierend auf bekannten Verfahren. Sobald der Kunststoff ausreichend plastifiziert ist, wird der Gewindeeinsatz in axialer Richtung in den plastifizierten Einbettbereich des Kunststoffbauteils eingepresst (Schritt S2). Vorzugsweise erfolgt das Einpressen mit dem zweiten axialen Ende 14 des Grundkörpers 10 voraus.

Um zu vermeiden, dass sich plastifizierter Kunststoff in der Bohrung 40 ablagert, wird diese Bohrung beispielsweise mit einem geeigneten Dorn oder einer anderen passend geformten Konstruktion blockiert. Auf diese Weise umströmt der plastifizierte Kunststoff nur die Strukturen an der radialen Außenseite 18 des Gewindeeinsatzes.

Während des Einpressens (Schritt S2) wird plastifizierter Kunststoff an den Erhebungen 24 des Bundes 20 aufgestaut (Schritt S4). Daraus folgt, dass während des Einpressens des Gewindeeinsatzes in das Kunststoffbauteil der Bund 20 im Bereich der Erhebungen 24 plastifizierten Kunststoff vor sich her schiebt. Im Bereich der radialen Täler 22 erfolgt im Schritt S3 ein Überströmen des aufgestauten plastifizierten Kunststoffs. Auf diese Weise gewährleisten die Täler 22 als Überströmgebiete, dass ausreichend plastifizierter Kunststoff in die Struktur 30 zwischen Bund 20 und dem ersten axialen Ende 12 des Grundkörpers fließt. Des Weiteren gewährleisten diese Überströmbereiche, dass ausreichend plastifizierter Kunststoff die Seitenflächen 26 benetzt, die dem ersten axialen Ende 12 des Grundkörpers 10 zugewandt sind.

Während des Einpressens fließt der plastifizierte Kunststoff in die Struktur 30, die einseitig oder beidseitig des Bundes 20 angeordnet ist (Schritt S5). Dieser plastifizierte Kunststoff füllt die Vertiefungen 36 der Struktur 30 nahezu vollständig oder vollständig aus, sodass der Kunststoff nach seinem Aushärten eine Verdrehsicherung des Gewindeeinsatzes um seine Längsachse L bildet.

Wie bereits oben erläutert worden ist, bewirkt das Aufstauen des plastifizierten Kunststoffs am Bund 20 sowie das Überströmen des plastifizierten aufgestauten Kunststoffs am Bund 20, dass die Seitenflächen 26 beidseitig vorzugsweise vollständig mit dem plastifizierten Kunststoff benetzt werden. Aufgrund der winkligen Anordnung der Seitenflächen 26 des Bundes 20 im Vergleich zur radialen Außenseite 18 des Grundkörpers 10 bildet der ausgehärtete Kunststoff an diesen Seitenflächen 26 vorzugsweise spitzwinklige Hinterschnitte aus. Diese spitzwinkligen Hinterschnitte stellen eine Positionssicherung des Gewindeeinsatzes in axialer Richtung dar. Das bedeutet, dass der Gewindeeinsatz sowohl gegen Auszug als auch gegen ein weiteres Eindrücken in den Kunststoffkörper gesichert ist.

In Analogie zum oben beschriebenen Einpressverfahren ist der Verbindungseinsatz ebenfalls mit Hilfe eines Einformverfahrens in einem Bauteil aus Kunststoff oder Metall befestigbar. Einformverfahren umfassen sogenannte Urformverfahren, mit denen ein Bauteil aus einem plastifizierten Material, wie bspw. Kunststoff oder Metall, herstellbar ist. Zu diesen Urformverfahren zählt vorzugsweise das Spritzgießen von Kunststoff und das Gießen von Metall. Das Einformverfahren wird exemplarisch anhand des Spritzgussverfahrens erläutert.

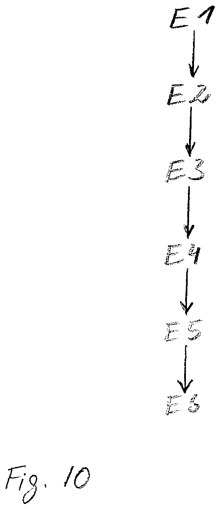

Das erfindungsgemäß bevorzugte Einformverfahren wird Bezug nehmend auf das Flussdiagramm der Figur 10 und anhand eines bevorzugten Spritzgussverfahrens erläutert. Zunächst wird im Schritt E1 der Verbindungseinsatz in einer Spritzgussform (nicht gezeigt) positioniert. Abhängig von der Ausgestaltung des Verbindungseinsatzes wird das Innere des Verbindungseinsatzes durch einen Stift oder dergleichen blockiert, um das Eindringen von Kunststoff oder eines anderen Werkstoffs zu vermeiden. Nachdem der Verbindungseinsatz in der Spritzgussform fest angeordnet worden ist, wird plastifizierter Kunststoff in die Spritzgussform gespritzt und dadurch der Verbindungseinsatz im Schritt E2 umspritzt. Allgemein handelt es sich dabei um ein plastifiziertes aushärtbares Material, wie oben bereits erwähnt worden ist, so dass der Verbindungseinsatz in das Bauteil eingeformt wird. Nachdem die Spritzgussform ausreichend mit Kunststoff gefüllt worden ist, härtet im Schritt E7 das umspritzte Material aus. Abschließend wird das Bauteil mit Verbindungseinsatz aus der Spritzgussform entformt (Schritt E8).

Während des Füllens der Form mit plastifiziertem Material, wie bspw. Kunststoff oder Metall, sei es beim Gießen oder Spritzgießen, wird der Verbindungseinsatz in gleicher Weise von dem plastifiziertem Material umströmt, wie es oben im Zusammenhang mit dem erfindungsgemäß bevorzugten Einbettverfahren beschrieben worden ist. Daher entsprechen die Verfahrensschritte E3 bis E6 den oben beschriebenen Verfahrensschritten S3 bis S6 des Einbettverfahrens, auf deren Beschreibung hiermit Bezug genommen wird.

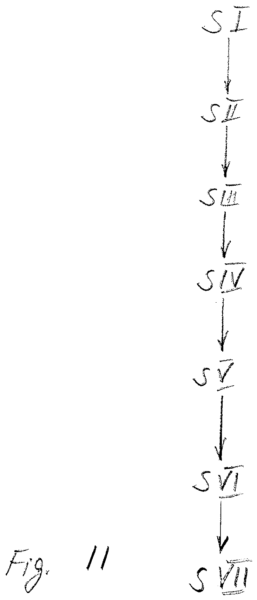

Weiter Bezug nehmend auf das Flussdiagramm der Figur 11 lässt sich das bevorzugte Herstellungsverfahren des erfindungsgemäß bevorzugten Gewindeeinsatzes folgendermaßen zusammenfassen. In einem ersten Schritt S I wird ein zylindrischer Grundkörper aus Metall bereitgestellt. Der zylindrische Grundkörper besteht aus einem Drahtstück, das von einem Endlosdraht im Schritt S II abgeschnitten oder abgeschert worden ist. Dieser zylindrische Grundkörper weist ein erstes und ein zweites Ende auf (nicht gezeigt).

Nachfolgend wird dieser Grundkörper mit dem ersten axialen Ende in einer ersten Matrize und mit dem zweiten axialen Ende in einer zweiten Matrize positioniert (Schritt S III). Betrachtet man die erste und die zweite Matrize in einem aneinander anliegenden Zustand, so definieren die erste und die zweite Matrize gemeinsam einen inneren Hohlraum, der vollständig oder teilweise die äußere Form des oben beschriebenen Gewindeeinsatzes vorgibt. Dies bedeutet, dass der definierte Hohlraum eine zylindrische Form mit einer umlaufenden Aussparung zum Ausformen des oben beschriebenen Bundes 20 aufweist. Vorzugsweise wird der Bund 20 in einem dafür vorgesehenen Hohlraum an der Grenzfläche zwischen der ersten und der zweiten Matrize ausgebildet. Diese Anordnung des Hohlraums ermöglicht ein ausreichendes Entformen des Gewindeeinsatzes, gerade wenn der Bund 20 spitzwinklig ausgerichtete Seitenflächen 26 in Bezug auf die Längsachse L des Gewindeeinsatzes aufweist.

Nachdem der Grundkörper in der ersten und zweiten Matrize positioniert worden ist (Schritt S III), dann erfolgt vorzugsweise durch ein aufeinander Zubewegen der ersten und zweiten Matrize ein Aufstauchen und/oder Fließpressen des ersten (Schritt S IV) und des zweiten Endes (Schritt S V) des Grundkörpers 10. Aufgrund dieser Vorgänge wird ein umlaufender Bund 20 ausgeformt, der im Vergleich zum übrigen Grundkörper 10 den größten Außendurchmesser aufweist. Gleichzeitig ist der Bund 20 zum ersten axialen Ende 12 und zum zweiten axialen Ende 14 des Grundkörpers 10 beabstandet angeordnet.

Es ist einerseits erfindungsgemäß bevorzugt, dass neben dem Bund auch die Struktur 30 an der radialen Außenseite 18 des Grundkörpers während des Aufstauchens und/oder Fließpressens durch die Bewegung der ersten und zweiten Matrize ausgeformt wird. Gemäß einer anderen bevorzugten Ausführungsform vorliegender Erfindung erfolgt aber im Schritt S VI ein Rollen oder Fließpressen einer radial vorstehenden Struktur, die an der radialen Außenseite 18 des Grundkörpers 10 angeordnet ist. Diese ausgeformte Struktur 30 erstreckt sich zudem parallel zur Längsachse L des Grundkörpers 10.

Gemäß einer weiteren bevorzugten Ausgestaltung des Herstellungsverfahrens wird im Schritt SVII der sich an das erste axiale Ende 12 des Grundkörpers 10 anschließende bolzenartige axiale Fortsatz 50 ausgeformt. Nachfolgend kann eine der oben genannten Verbindungskonturen 52 an dem Fortsatz 50 vorgesehen werden.

### Bezugszeichenliste

- 10: zylindrischer Grundkörper
- 12: erstes axiales Ende
- 14: zweites axiales Ende
- 16: radiale Innenseite
- 18: radiale Außenseite
- 20: Bund
- 22: Tal
- 24: Erhebung
- 26: Seitenfläche
- 30: Struktur
- 32: Rändelung
- 34: Steg
- 36: Vertiefung
- 40: Bohrung
- 42: Gewinde
- 50: Fortsatz
- 52: Gewinde
- S1: Plastifizieren
- S2: Einpressen
- S3: Überströmen
- S4: Aufstauen
- S5: Fließen
- S6: Überströmen der Seitenflächen des Bundes
- E1: Positionieren
- E2: Umspritzen/Gießen
- E3: Überströmen
- E4: Aufstauen
- E5: Fließen
- E6: Überströmen der Seitenflächen des Bundes
- E7: Aushärten
- E8: Entformen
- S I: Bereitstellen
- S II: Abscheren oder Abschneiden
- S III: Positionieren
- S IV, S V: Aufstauchen und/oder Fließpressen des ersten und zweiten Endes
- S VI: Rollen oder Fließpressen
- S VII: Ausformen

## Patentansprüche

1. Verbindungseinsatz, der in ein Kunststoffbauteil einformbar ist und der die folgenden Merkmale aufweist:
a. einen zylindrischen Grundkörper (10) mit einer radialen Außenseite (18) sowie einem ersten (12) und einem zweiten axialen Ende (14),
b. mindestens einen an der radialen Außenseite (18) des Grundkörpers (10) angeordneten umlaufenden Bund (20), der im Vergleich zum übrigen Grundkörper (10) zumindest abschnittsweise den größten Außendurchmesser aufweist und der beabstandet zum ersten (12) und zweiten axialen Ende (14) des Grundkörpers (10) angeordnet ist,
c. eine an der radialen Außenseite (18) des Grundkörpers (10) angeordnete radial vorstehende Struktur (30), die kontinuierlich und/oder diskontinuierlich parallel und/oder schräg zur Längsachse (L) des Grundkörpers (10) zwischen dem Bund (20) und dem ersten (12) und/oder dem zweiten axialen Ende (14) verläuft, wobei
d. der Bund (20) in einer umfänglichen Verlaufsrichtung einen sich ändernden Durchmesser aufweist, sodass eine Mehrzahl von radialen Tälern (22) und Erhebungen (24) im Bund (20) angeordnet sind, und
e. der zylindrische Grundkörper (10) weist eine zentrale Bohrung (40) mit einer radialen Innenseite auf, an der eine Verbindungsstruktur vorgesehen ist, vorzugsweise ein Gewinde (42), ein Bajonettverschluss oder eine radiale Rändelung, oder
f. der zylindrische Grundkörper (10) weist an dem ersten axialen Ende (12) einen bolzenartigen axialen Fortsatz (50) auf.

2. Verbindungseinsatz gemäß Anspruch 1, dessen Bund (20) in axialer Richtung des Grundkörpers durch zwei Seitenflächen (26) begrenzt ist, die zumindest abschnittsweise jeweils einen Winkel von maximal 90° mit der Längsachse (L) des Grundkörpers (10), insbesondere ein Winkel < 90°, einschließen.

3. Verbindungseinsatz gemäß einem der vorhergehenden Ansprüche, dessen radial vorstehende Struktur (30) aus einer parallel zur Längsachse (L) des Grundkörpers (10) verlaufenden Rändelung (32) besteht, die einseitig oder beidseitig vom Bund (20) angeordnet ist.

4. Verbindungseinsatz gemäß Anspruch 3, dessen Rändelung (32) aus gleichmäßig zueinander beabstandeten radial vorstehenden Stegen (34) besteht, die eine eckige, abgerundete oder krummlinige Querschnittsform aufweisen.

5. Verbindungseinsatz gemäß einem der vorhergehenden Ansprüche, dessen mindestens einer Bund (20) axial mittig und/oder benachbart zu den axialen Enden (12, 14) angeordnet ist.

6. Verbindungseinsatz gemäß einem der vorhergehenden Ansprüche, dessen Bund (10) oder dessen mehrere Bunde gemeinsam eine axiale Breite von 10% bis 60% einer Gesamtlänge des Grundkörpers (10), vorzugsweise 20% bis 40%, aufweist/aufweisen.

7. Verbindungseinsatz gemäß Anspruch 1, wobei der zylindrische Grundkörper (10) an dem ersten axialen Ende (12) den bolzenartigen axialen Fortsatz (50) aufweist und der Fortsatz (50) ist stufenförmig vom Grundkörper (10) abgesetzt und/oder weist vorzugsweise eine Länge im Bereich von 40 % bis 200 % einer Länge des Grundkörpers (10) auf.

8. Verbindungseinsatz gemäß Anspruch 1, wobei der zylindrische Grundkörper (10) an dem ersten axialen Ende (12) den bolzenartigen axialen Fortsatz (50) aufweist, oder gemäß Anspruch 7, dessen Fortsatz (50) ein Verbindungsbolzen mit einem Außengewinde (52) oder einer Verrastungskontur oder einer Steckverbindungskontur ist.

9. Einbettverfahren für einen Verbindungseinsatz gemäß einem der vorhergehenden Ansprüche, das die folgenden Schritte aufweist:
a. Plastifizieren (S1) von Material in einem Einbettbereich eines ausgeformten Kunststoffbauteils,
b. Einpressen (S2) des Verbindungseinsatzes in axialer Richtung in den Einbettbereich derart, dass Material des Kunststoffbauteils an dem Bund aufgestaut wird und zumindest teilweise den Bund überströmt, sodass der Bund nach Materialaushärtung eine axiale Auszugssicherung bildet.

10. Einbettverfahren gemäß Anspruch 9, wobei der Bund des Verbindungselements radiale Täler und Erhebungen aufweist, sodass während des Einpressens das plastifizierte Material in den radialen Tälern den Bund überströmt (S3) und an den Erhebungen aufgestaut (S4) wird.

11. Einbettverfahren gemäß Anspruch 9 oder 10, wobei das plastifizierte Material in eine axiale Rändelung benachbart zum Bund fließt (S5), sodass dadurch nach Aushärtung eine Verdrehsicherung entsteht.

12. Einbettverfahren gemäß Anspruch 9, wobei das plastifizierte Material an dem Bund beidseitig jeweils eine axiale Seitenfläche überströmt (S6), sodass das plastifizierte Material nach einem Aushärten einen spitzwinkligen Hinterschnitt als beidseitige axiale Auszugssicherung bildet.

13. Einformverfahren für einen Verbindungseinsatz gemäß einem der Ansprüche 1 bis 8, das die folgenden Schritte aufweist:
a. Positionieren (E1) des Verbindungseinsatzes in einer Form, vorzugsweise Spritzform,
b. Umgeben, vorzugsweise Umspritzen (E2), des Verbindungseinsatzes mit einem plastifizierten aushärtbaren Material, wobei der Verbindungseinsatz in ein Bauteil eingeformt wird, und
c. Aushärten (E7) des umgebenden, vorzugsweise umspritzten, Materials und Entformen (E8) des Bauteils mit Verbindungseinsatz aus der Form, vorzugsweise Spritzform.

14. Einformverfahren gemäß Anspruch 13, wobei der Bund des Verbindungselements radiale Täler und Erhebungen aufweist, sodass während des Umgebens, vorzugsweise Umspritzens (E2), das plastifizierte Material in den radialen Tälern den Bund überströmt (E3) und an den Erhebungen aufgestaut (E4) wird.

15. Einformverfahren gemäß Anspruch 13 oder 14, wobei das plastifizierte Material in eine axiale Rändelung benachbart zum Bund fließt (E5), sodass dadurch nach Aushärtung eine Verdrehsicherung entsteht.

16. Einformverfahren gemäß Anspruch 13, wobei das plastifizierte Material an dem Bund beidseitig jeweils eine axiale Seitenfläche überströmt (E6), sodass das plastifizierte Material nach einem Aushärten einen spitzwinkligen Hinterschnitt als beidseitige axiale Auszugssicherung bildet.

17. Herstellungsverfahren eines Verbindungseinsatzes gemäß einem der Ansprüche 1 bis 8, das die folgenden Schritte aufweist:
a. Bereitstellen (SI) eines zylindrischen Grundkörpers aus Metall, der ein erstes und ein zweites Ende aufweist,
b. Positionieren (SIII) des Grundkörpers mit dem ersten Ende zu einer ersten Matrize und mit dem zweiten Ende zu einer zweiten Matrize,
c. Aufstauchen und/oder Fließpressen des ersten (SIV) und zweiten Endes (SV) des Grundkörpers, sodass ein umlaufender Bund ausgeformt wird, der im Vergleich zum übrigen Grundkörper den größten Außendurchmesser aufweist und beabstandet zum ersten und zweiten Ende des Grundkörpers angeordnet ist und
d. Rollen oder Fließpressen (SVI) einer radial vorstehenden Struktur, die an einer radialen Außenseite des Grundkörpers angeordnet ist und sich parallel zu einer Längsachse des Grundkörpers erstreckt.

18. Herstellungsverfahren gemäß Anspruch 17, wobei ein Drahtstück von einem Endlosdraht abgeschert wird (SII).

19. Herstellungsverfahren gemäß einem der Ansprüche 17 bis 18, mit dem weiteren Schritt:
Ausformen (SVII) eines sich an das erste axiale Ende (12) des Grundkörpers (10) anschließenden bolzenartigen axialen Fortsatzes (50).

20. Bauteil mit einem Verbindungseinsatz gemäß einem der Ansprüche 1 bis 8.

## Claims

1. Connecting insert, which is moldable into a plastic component and which comprises the following features:
a. a cylindrical main body (10) having a radially outer side (18) as well as a first (12) and a second axial end (14),
b. at least one circumferential collar (20) arranged at the radially outer side (18) of the main body (10) which has at least in sections the largest outer diameter compared to the remaining main body (10) and which is arranged at a distance to the first (12) and the second axial end (14) of the main body (10),
c. a radially protruding structure (30) arranged at the radially outer side (18) of the main body (10) which extends continuously and/or discontinuously parallel and/or inclined to the longitudinal axis (L) of the main body (10) between the collar (20) and the first (12) and/or the second axial end (14), wherein
d. the collar has a changing diameter in a circumferential course, so that a plurality of radial valleys (22) and elevations (24) are arranged in the collar (20), and
e. the cylindrical main body (10) comprises a central bore (40) with a radially inner side at which a connecting structure is provided, preferably a thread (42), a bayonet closure or a radial knurling, or
f. the cylindrical main body (10) comprises a bolt like axial extension (50) at the first axial end (12).

2. Connecting insert according to claim 1, the collar (20) of which is limited in axial direction of the main body by two lateral faces (26), each enclosing at least in sections an angle of at most 90° with the longitudinal axis (L) of the main body (10), especially an angle of < 90°.

3. Connecting insert according to one of the preceding claims, the radially protruding structure (30) of which consists of a knurling (32) extending parallel to the longitudinal axis (L) of the main body (10), which is arranged on one or both sides of the collar (20).

4. Connecting insert according to claim 3, the knurling (32) of which consists of radially protruding webs (34) which are evenly spaced with respect to each other and that have a polygonal, rounded or curvilinear cross-sectional form.

5. Connecting insert according to one of the preceding claims, the at least one collar (20) of which is arranged axially centrally and/or adjacent to the axial ends (12, 14).

6. Connecting insert according to one of the preceding claims, the collar (10) or the plurality of collars of which commonly have an axial width of 10 % to 60 % of a total length of the main body (10), preferably 20 % to 40 %.

7. Connecting insert according to claim 1, with the cylindrical main body (10) comprising the bolt-like axial extension (50) at the first axial end (12) and the extension (50) is offset from the main body (10) in a stepped manner and/or preferably comprises a length in the range from 40 % to 200 % of a length of the main body (10).

8. Connecting insert according to claim 1, with the cylindrical main body (10) comprising the bolt-like axial extension (50) at the first axial end 12, or according to claim 7 with the extension (50) of the connecting insert being a connecting bolt with an outer thread (52) or a locking contour or a plug connection contour.

9. Embedding method for a connecting insert according to one of the preceding claims comprising the following steps:
a. plasticizing (S1) of material in an embedding portion of a formed plastic component,
b. pressing in (S2) of the connecting insert in axial direction into the embedding portion such that material of the plastic component is dammed up at the collar and at least partially flows over the collar so that the collar forms an axial security against extraction after curing of the material.

10. Embedding method according to claim 9, wherein the collar of the connecting insert comprises radial valleys and elevations so that during the pressing-in, the plasticized material in the radial valleys flows over (S3) the collar and is dammed up (S4) at the elevations.

11. Embedding method according to claim 9 or 10, wherein the plasticized material flows into (S5) an axial knurling adjacent to the collar so that thereby a security against rotation is realized after curing.

12. Embedding method according to claim 9, wherein the plasticized material flows over (S6) an axial lateral face on both sides of the collar so that the plasticized material forms an acute-angled undercut as double-sided axial security against extraction after curing.

13. Molding method for a connecting insert according to one of the claims 1 to 8 comprising the following steps:
a. positioning (E1) the connecting insert in a mold, preferably an injection mold,
b. surrounding, preferably over-molding (E2), the connecting insert with a plasticized curable material, wherein the connecting insert is molded into a component, and
c. curing (E7) the surrounding, preferably over-molded, material, and demolding (E8) the component with connecting insert from the mold, preferably the injection mold.

14. Molding method according to claim 13, wherein the collar of the connection element comprises radial valleys and elevations so that during the surrounding, preferably over-molding (E2), the plasticized material flows over (E3) the collar in the radial valleys and is dammed up (E4) at the elevations.

15. Molding method according to claim 13 or 14, wherein the plasticized material flows into (E5) an axial knurling adjacent to the collar so that thereby a security against rotation is created after curing.

16. Molding method according to claim 13, wherein the plasticized material at the collar flows (E6) over an axial lateral face at both sides respectively so that the plasticized material forms an acute-angled undercut as two-sided axial security against extraction after curing.

17. Manufacturing method of a connecting insert according to one of the claims 1 to 8, comprising the following steps:
a. providing (SI) a cylindrical main body of metal having a first and a second end,
b. positioning (SIII) the main body with the first end to a first die and with the second end to a second die,
c. compressing and/or extruding the first (SIV) and the second end (SV) of the main body so that a circumferential collar is formed, which has the largest outer diameter compared to the remaining main body and which is arranged spaced with respect to the first and the second end of the main body and
d. rolling or extruding (SVI) a radially protruding structure, which is arranged at a radially outer side of the main body and which extends parallel to a longitudinal axis of the main body.

18. Manufacturing method according to claim 17, wherein a wire piece is shore off (SII) from an endless wire.

19. Manufacturing method according to one of the claims 17 to 18, comprising the further step:
forming (SVII) a bolt like axial extension (50) following the first axial end (12) of the main body (10).

20. Component comprising a connecting insert according to one of the claims 1 to 8.

## Revendications

1. Insert d'assemblage apte à être moulé dans une pièce en plastique et présentant les caractéristiques suivantes :
a. un corps de base cylindrique (10) avec un côté extérieur radial (18) ainsi qu'une première (12) et une deuxième extrémité axiale (14),
b. au moins une collerette périphérique (20) disposée sur le côté extérieur radial (18) du corps de base (10), laquelle présente au moins par endroits le plus grand diamètre extérieur en comparaison avec le reste du corps de base (10) et laquelle est disposée de façon espacée par rapport à la première (12) et à la deuxième extrémité axiale (14) du corps de base (10),
c. une structure faisant saillie radialement (30) sur le côté extérieur radial (18) du corps de base (10), laquelle s'étend de façon continue et/ou discontinue parallèlement et/ou obliquement à l'axe longitudinal (L) du corps de base (10), entre la collerette (20) et la première (12) et/ou la deuxième extrémité axiale (14), dans lequel
d. la collerette (20) présente un diamètre variable dans une direction d'extension périphérique, de sorte qu'une pluralité de creux (22) et de reliefs (24) radiaux sont disposés dans la collerette (20), et
e. le corps de base cylindrique (10) présente un alésage central (40) avec un côté intérieur radial, sur lequel est prévue une structure d'assemblage, de préférence un filetage (42), une fermeture à baïonnette ou un moletage radial, ou
f. le corps de base cylindrique (10) présente une saillie axiale du genre boulon (50) au niveau de la première extrémité axiale (12).

2. Insert d'assemblage selon la revendication 1, dont la collerette (20) est limitée par deux surfaces latérales (26) dans la direction axiale du corps de base, lesquelles forment au moins par endroits respectivement un angle de 90° maximum avec l'axe longitudinal (L) du corps de base (10), en particulier un angle < 90°.

3. Insert d'assemblage selon l'une des revendications précédentes, dont la structure faisant saillie radialement (30) est constituée d'un moletage (32) s'étendant parallèlement à l'axe longitudinal (L) du corps de base (10), lequel est disposé sur un côté ou sur les deux côtés de la collerette (20).

4. Insert d'assemblage selon la revendication 3, dont le moletage (32) est constitué d'âmes (34) faisant saillie radialement tout en étant espacées entre elles de façon régulière, lesquelles présentent une forme de section transversale angulaire, arrondie ou curviligne.

5. Insert d'assemblage selon l'une des revendications précédentes, dont l'au moins une collerette (20) est disposée de façon axialement centrale et/ou de façon adjacente aux extrémités axiales (12, 14).

6. Insert d'assemblage selon l'une des revendications précédentes, dont la collerette (10) ou dont la pluralité de collerettes présente(-nt) conjointement une largeur axiale mesurant de 10% à 60% d'une longueur totale du corps de base (10), de préférence de 20% à 40%.

7. Insert d'assemblage selon la revendication 1, dans lequel le corps de base cylindrique (10) présente une saillie axiale du genre boulon (50) au niveau de la première extrémité axiale (12), et la saillie (50) est décalée de façon étagée par rapport au corps de base (10) et/ou présente de préférence une longueur comprise entre 40% et 200% d'une longueur du corps de base (10).

8. Insert d'assemblage selon la revendication 1, dans lequel le corps de base cylindrique (10) présente une saillie axiale du genre boulon (50) au niveau de la première extrémité axiale (12), ou selon la revendication 7, dont la saillie (50) est un boulon d'assemblage avec un filetage extérieur (52) ou un contour d'encliquetage ou un contour d'assemblage par enfichage.

9. Procédé d'inclusion pour un insert d'assemblage selon l'une des revendications précédentes, présentant les étapes suivantes :
a. plastification (S1) de matériau dans une région d'inclusion d'une pièce en plastique moulée,
b. pressage (S2) de l'insert d'assemblage dans la direction axiale dans la région d'inclusion, de telle façon que le matériau de la pièce en plastique s'accumule sur la collerette et recouvre au moins partiellement la collerette, de sorte que la collerette forme une sécurité anti-extraction axiale après le durcissement du matériau.

10. Procédé d'inclusion selon la revendication 9, dans lequel la collerette de l'élément d'assemblage présente des creux et des reliefs radiaux, de sorte que pendant le pressage, le matériau plastifié recouvre la collerette (S3) au niveau des creux radiaux et s'accumule (S4) au niveau des reliefs.

11. Procédé d'inclusion selon la revendication 9 ou 10, dans lequel le matériau plastifié s'écoule dans un moletage axial adjacente à la collerette (S5), de manière à former une sécurité antirotation après durcissement.

12. Procédé d'inclusion selon la revendication 9, dans lequel le matériau plastifié recouvre (S6) respectivement une surface latérale axiale sur les deux côtés de la collerette, de sorte que le matériau plastifié forme une contre-dépouille à angle aigu en tant que sécurité anti-extraction axiale bilatérale après un durcissement.

13. Procédé d'inclusion pour un insert d'assemblage selon l'une des revendications 1 à 8, présentant les étapes suivantes :
a. positionnement (E1) de l'insert d'assemblage dans un moule, de préférence un moule à injection,
b. enrobage, de préférence par injection (E2), de l'insert d'assemblage avec un matériau durcissable plastifié, l'insert d'assemblage étant moulé dans une pièce, et
c. durcissement (E7) du matériau d'enrobage, de préférence injecté, et démoulage (E8) de la pièce avec l'insert d'assemblage hors du moule, de préférence du moule à injection.

14. Procédé d'inclusion selon la revendication 13, dans lequel la collerette de l'insert d'assemblage présente des creux et des reliefs radiaux, de sorte que pendant l'enrobage, de préférence pendant l'enrobage par injection (E2), le matériau plastifié recouvre la collerette dans les creux radiaux (E3) et s'accumule sur les reliefs (E4).

15. Procédé d'inclusion selon la revendication 13 ou 14, dans lequel le matériau plastifié s'écoule dans un moletage axial adjacent à la collerette (E5), de manière à former une sécurité antirotation après durcissement.

16. Procédé d'inclusion selon la revendication 13, dans lequel le matériau plastifié recouvre respectivement surface latérale axiale sur les deux côtés de la collerette (E6), de sorte que le matériau plastifié forme une contre-dépouille à angle aigu en tant que sécurité anti-extraction axiale bilatérale après un durcissement.

17. Procédé de fabrication d'un insert d'assemblage selon l'une des revendications 1 à 8, présentant les étapes suivantes :
a. mise à disposition (SI) d'un corps de base cylindrique en métal, lequel présente une première et une deuxième extrémité,
b. positionnement (SIII) du corps de base avec la première extrémité vers une première matrice et la deuxième extrémité vers une deuxième matrice,
c. refoulement et/ou extrusion de la première (SIV) et de la deuxième extrémité (SV) du corps de base, de manière à former une collerette périphérique, laquelle présente le plus grand diamètre extérieur en comparaison avec le reste du corps de base et laquelle est disposée de façon espacée par rapport à la première et à la deuxième extrémité du corps de base et
d. roulage ou extrusion (SVI) d'une structure faisant saillie radialement, laquelle est disposée sur un côté extérieur radial du corps de base et s'étend parallèlement à un axe longitudinal du corps de base.

18. Procédé de fabrication selon la revendication 17, dans lequel un morceau de fil métallique est coupé à partir d'un fil métallique sans fin (SII).

19. Procédé de fabrication selon l'une des revendications 17 à 18, comprenant l'étape supplémentaire suivante :
- démoulage (SVII) d'une saillie axiale du genre boulon (50) prolongeant la première extrémité axiale (12) du corps de base (10).

20. Pièce avec un insert d'assemblage selon l'une des revendications 1 à 8.
